# EUROPEAN PATENT SPECIFICATION

(11) **EP 2 210 861 B1**
(45) Date of publication and mention of the grant of the patent: **08.08.2012**
(21) Application number: 08836067.2
(22) Date of filing: 30.09.2008
(51) Int. Cl.: C01G 29/00, B01D 53/94, B01J 23/18, B01J 37/03

(54) **DIESEL PARTICULATE FILTER**
DIESELPARTIKELFILTER
FILTRE À PARTICULES DIESEL

(30) Priority: 01.10.2007 JP 2007257647; 28.03.2008 JP 2008088847
(43) Date of publication of application: 28.07.2010
(73) Proprietor: DOWA Electronics Materials Co., Ltd., Chiyoda-ku Tokyo 101-0021 (JP)
(72) Inventor: WATAJIMA, Akihisa, Tokyo 101-0021 (JP); YUZAKI, Koichi, Tokyo 101-0021 (JP)
(74) Representative: Müller-Boré & Partner Patentanwälte
(86) International application number: PCT/JP2008/067748
(87) International publication number: WO 2009/044736

(56) References cited:
- WO-A1-2005/085137
- JP-A- 6 211 525
- JP-A- 6 279 027
- JP-A- 2003 238 159
- JP-A- 2004 113 936
- JP-A- 2005 162 914
- JP-A- 2006 159 021
- JP-A- 2006 224 032
- JP-A- 2008 105 871
- JP-T- 2005 521 617

## Description

### Technical Field

The present invention relates to a diesel particulate filter.

### Description of Related art

Cerium oxide is used as an exhaust gas purifying catalyst, for the purpose of removing HC, CO, NOₓ, being automobile exhaust gas components, and improving a purifying factor for particulate matters (called "PM" in the present invention) comprising carbon as a main component contained in the exhaust gas of a diesel engine, by utilizing the property of the cerium oxide, such that oxygen is absorbed under oxidation atmosphere and the oxygen is desorped under reduction atmosphere (for example see patent document 1: Japanese Patent No.2651993).

Particularly, nitrogen oxide (NOₓ) and PM can be given as a problem of the exhaust gas of the diesel engine. Particularly, PM is a fine particulate comprising carbon as the main component, and a method of capturing PM by setting a diesel particulate filter (DPF) made of porous ceramics in an exhaust gas flow passage, can be given as a removing method widely used at present. The captured PM is intermittently or continuously subjected to burning treatment by using an external heater, etc, and the DPF is regenerated in a state before capturing PM.

A method of burning PM by forcible heating from outside like using an electric heater and burner, etc, as described above, and a method of setting an oxidative catalyst on the engine side of the DPF, then making NO contained in the exhaust gas turn into NO₂, and burning PM by an oxidation power of NO₂, are generally used in the DPF regeneration process. However, a power source needs to be installed outside, for activating the electric heater and the burner, and therefore a mechanism of securing and operating them is also needed separately, thus complicating a system itself.
Further, the oxidative catalyst has also various problems to be solved, such that an exhaust gas temperature is not high enough to sufficiently exhibit a catalytic activity, and NO required for PM combustion is not contained in the exhaust gas unless a certain driving state is set.

### Disclosure of the Invention

### Problem to be solved by the Invention

Under such a circumstance, it is preferable that a catalyst is carried by DPF itself and after decreasing a combustion start temperature of PM by its catalytic action, the PM is burned continuously at an exhaust gas temperature ultimately.

In view of the above-described problem, the present invention is provided, and an object of the present invention is to provide a diesel particulate filter, capable of decreasing a burning start temperature and capable of reducing a time required for burning.

### Means for solving the Problem

After strenuous research for solving the above-described problem, it is found by inventors of the present invention that a combustion start temperature can be decreased by adding a third component in addition to a composite oxide such as Bi and Ce proposed conventionally and thereby the above-described problem is solved, to complete the present invention.

Namely, in order to solve the above-described problem, the invention provides a diesel particulate filter according to claim 1.

The invention further provides the cerium-containing composite oxide, wherein Bi and Pr are contained, and under atmosphere containing 2% or more of H₂, an oxygen desorption speed at 300°C is 0.1µmol/g·sec or more.

In the cerium-containing composite oxide according to the invention the molar ratio of Ce, Bi, and Pr is expressed by Ce:Bi:Pr = (1-x-y):x:y, 0 < x ≤ 0.3, 0 < y ≤ 0.5 .

The invention further provides the cerium-containing composite oxide, wherein at least one kind of platinum group element selected from Pt, Rh, and Pd is carried.

The invention further provides the cerium-containing composite oxide , wherein an amount of the carried platinum group element is less than 5%.

### Advantage of the Invention

According to the present invention, the cerium-containing composite oxide added with a third component is provided, in addition to a composite oxide of Bi and Ce, and therefore a burning start temperature can be reduced and a time required for burning can be reduced.

### Best Mode for carrying out the Invention

### [Cerium-containing composite oxide]

The cerium-containing composite oxide will be described hereinafter in detail. Note that in this specification, "%" means "mass%" if not specified particularly.

The cerium-containing composite oxide is the cerium-containing composite oxide containing Bi and Pr. Such a composite oxide has an oxide phase in which Ce of a part of a cerium oxide structure having a fluorite type structure is substituted with Bi and Pr. The cerium-containing composite oxide has an oxygen absorption desorption capability of a large volume such as 500µmol/g or more at 300°C.

Further, in order to enhance PM combustion efficiency in a low temperature region, oxygen accumulated in the cerium-containing composite oxide has preferably an oxygen desorption capability of 0.1µmol/g·sec or more at 300°C, under atmosphere containing 2% or more of H₂.

Further, the cerium-containing composite oxide contains more than 0 to 30at% of Bi, preferably 1 to 25at% and more preferably 2 to 20at% of Bi, and contains more than 0 to 50 at % of Pr, preferably 1 to 45 at % and more preferably 2 to 40 at% of Pr, and remaining portion is occupied by cerium, with respect to a total amount of Ce, Bi, and Pr.

It is known that owing to Bi contained in the cerium-containing composite oxide, the oxygen absorption desorption capability is improved and the PM combustion temperature is decreased in the composite oxide. However, when a content ratio of Bi is high, a melting reaction of the composite oxide occurs, and as a result a catalytic performance is deteriorated in some cases. Meanwhile, in the cerium-containing composite oxide , an amount of Bi is in the aforementioned range, with respect to the total amount of Ce, Bi, and Pr, and therefore even if the composite oxide is exposed to a high temperature, melting of the composite oxide can be prevented.

Namely, it is found that by setting an addition amount of Bi, being an element with a low melting point, to Bi < Ce in molar ratio, decrease of the melting point of the cerium-containing composite oxide can be prevented. More specifically, the amount of Bi in the cerium-containing composite oxide is set in the aforementioned range. By setting the amount of Bi in the aforementioned range, it can be considered that when the composite oxide is exposed to a high temperature, Bi is released from the fluorite type structure, and different phases of Bi oxide, and a compound of Bi and added element are generated, thereby making it possible to avoid the decrease of the melting point of the composite oxide.

Meanwhile, when Pr is contained in the cerium-containing composite oxide, this contributes to an improvement of the oxygen absorption desorption capability and an improvement of a heat resistance as a PM combustion catalyst and a diesel particulate filter. An amount of Pr may be beyond 50at% with respect to the total amount of Ce, Bi, and Pr. However, after the examination by the inventors of the present invention, it is found that 50at% or less of Pr content is more likely to improve PM combustion activity. Accordingly, as a structural ratio of Pr, the content of Pr is beyond 0 and 50at% or less, preferably 1 to 45at%, and more preferably 2 to 40at%, with respect to the total amount of Ce, Bi, and Pr.

Namely, regarding the molar ratio of metal elements constituting the cerium-containing composite oxide, it is suitable to satisfy 0 < x ≤ 0.3, 0 < y ≤ 0.5, when the molar ratio of Ce, Bi, Pr is expressed by Ce:Bi:Pr = (1 - x - y):x:y. With this structure, the oxygen absorption desorption capability of a large volume can be exhibited.

Further, when any one of the platinum group elements such as Pt, Pd, and Rh is carried on the cerium-containing composite oxide, an oxygen desorption speed can be increased. However, carrying of the platinum group elements is a factor of increasing cost. Therefore, from a viewpoint of achieving PM combustion at a low temperature while suppressing increase of the cost, the amount of carried platinum group elements is suppressed to less than 5%, preferably less than 3%, and more preferably less than 1%.

### [A manufacturing method of the cerium-containing oxide present invention]

The aforementioned cerium-containing oxide can be suitably synthesized by sintering a precipitated product obtained by a wet-type method.

For example, a mixture of Ce salt, Bi salt, and Pr salt is precipitated by a precipitating agent from a mixed solution of water-soluble salt of Ce, Bi, Pr respectively, and the obtained precipitate is dried at a temperature of 60 to 200°C, to thereby generate a precursor, and heat treatment is applied to the precursor at 300 to 1000°C for 0.5 to 100 hours, to thereby synthesize the composite oxide.

Specifically, alkali, being the precipitating agent, is added and reacted to/with a solution containing Ce, Bi, and Pr, to thereby generate the precipitate. The precipitated product is filtered, washed, and dried, to thereby obtain the precursor. An upper limit of an ion concentration of Ce, Bi, Pr in a solution for generating precipitation, is determined by a degree of solubility. When the concentration in the solution of the water-soluble salt is excessively concentrated, there is a possibility that a uniform reaction does not occur during stirring and the solution becomes non-uniform, and addition to an apparatus during stirring becomes excessive, and therefore it is preferable to set a suitable concentration.

### [Application of the cerium-containing composite oxide to a diesel exhaust gas purifying catalyst]

The above-described cerium-containing composite oxide can exhibit the oxygen absorption desorption capability of a large volume such as 500µmol/g or more at 300°C or more. Therefore, when it is used as a PM combustion catalyst, a mechanism of forcibly burning PM by adding external heat thereto, which is performed originally, can be simplified or the mechanism itself can be omitted. Further, in order to enhance the PM reduction effect and the oxygen desorption speed, the platinum group elements are preferably further carried on the cerium-containing composite oxide.

As the aforementioned platinum group elements, Pt, Rh, Pd, Ir, Ru, and Os can be given, and one or more kinds of them can be arbitrarily selected and used. As a carrying form of the platinum group metals, the platinum group elements may be adhered to the surface of each particulate of the composite oxide or may be present as a solid solution in a crystal structure of the composite oxide.

### [Application of the diesel exhaust gas purifying catalyst to the diesel particulate filter]

By carrying on a filter matrix, the PM combustion catalyst, being the cerium-containing composite oxide with platinum-group metal carried thereon, the diesel particulate filter capable of efficiently burning PM can be obtained. As the filter matrix, DPF made of a material such s cordierite or SiC used conventionally for an automobile exhaust gas, is used.

### Example 1

The present invention will be described in detail hereinafter by using examples. However, the present invention is not limited to these examples.

### (Example 1)

### 1. Manufacture of the cerium-containing composite oxide

Cerium nitrate hexahydrate (Ce(NO₃)₃·6H₂O) was prepared as a Ce-source, and bismuth nitrate pentahydrate (Bi(NO₃)₃·5H₂O) was prepared as a Bi-source. As a Pr-source, powders of praseodymium oxide (Pr₆O₁₁) were dissolved into a concentrated nitric acid solution, to thereby obtain a nitric acid solution of Pr.

The aforementioned each nitrate salt and the nitric acid solution of Pr were mixed, in a molar ratio of Ce:Bi:Pr=5:1:4, to thereby obtain a raw material aqueous solution. An ammonium carbonate aqueous solution, being the precipitating agent, was added in an amount equal to 1.0 to 5.1, while stirring the aqueous solution at 30°C. Then, by continuing stirring for 30 minutes, a precipitating reaction was sufficiently advanced. The obtained precipitate was filtered, washed with water, and dried for about 15 hours at 125°C, to thereby obtain dried powders. The obtained dried powders are selected to be a precursor. Next, the precursor thus obtained was sintered for 2 hours at 800°C under atmospheric pressure, to thereby obtain the cerium-containing composite oxide containing Bi and Pr.

### 2. Measurement of the oxygen absorption desorption capability

0.1g of the obtained sample of the cerium-containing composite oxide was prepared, and was packed into a cell made of quartz. The cell made of quartz was set in a reactor, and a temperature was increased to 300°C, being a measurement temperature, under He atmosphere. After the temperature was stabilized, reduction treatment was performed for 10 minutes by 10% H₂ gas. Then, the atmosphere was switched to the He atmosphere again, and a constant volume of O₂ was intermittently introduced thereto. The amount of O₂ on the outlet side of the sample was observed, and intermittent addition of O₂ was performed until the amount of O₂ on the outlet side was constant. The oxygen absorption desorption capability at 300°C was evaluated from a total absorption amount of O₂. ChemBET measuring device by YUASA IONICS was used as a measuring device.

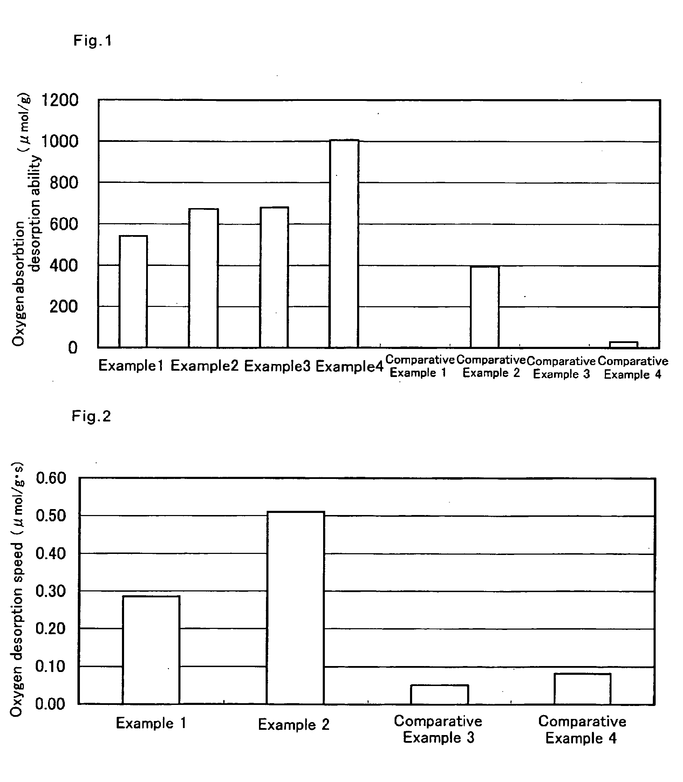

Next, the same operation as an evaluation operation of the aforementioned oxygen absorption desorption capability was performed other than a point that a measurement temperature was set to 500°C, to thereby evaluate the oxygen absorption desorption capability at 500°C of the obtained cerium-containing composite oxide.
Results thereof are shown in table 1 and FIG. 1. Note that FIG. 1 is a bar graph, wherein the oxygen absorption desorption capability at 300°C is taken on the vertical axis.

### 3. Calculation of the oxygen desorption speed

The obtained 0.002g of the cerium-containing composite oxide of example 1 was prepared, which was then filled into a cell made of aluminum. The aluminum cell was set in a TG/DTA device, and the temperature was increased to 300°C in N₂ gas atmosphere. After the temperature was stabilized, 2% H₂ gas was flown through the cerium-containing composite oxide sample, and the reduction treatment was performed. Then, weight reduction of the cerium-containing composite oxide sample by the reduction treatment was measured, and the oxygen desorption speed was calculated from an inclination of a weight reduction curve. Note that TG/DTA measuring device by Seiko Instruments Inco. was used as the measuring device.

The results thereof are shown in table 1 and FIG. 2. FIG. 2 is a bar graph wherein the oxygen desorption speed is taken on the vertical axis.

### 4. Measurement of PM combustion activity

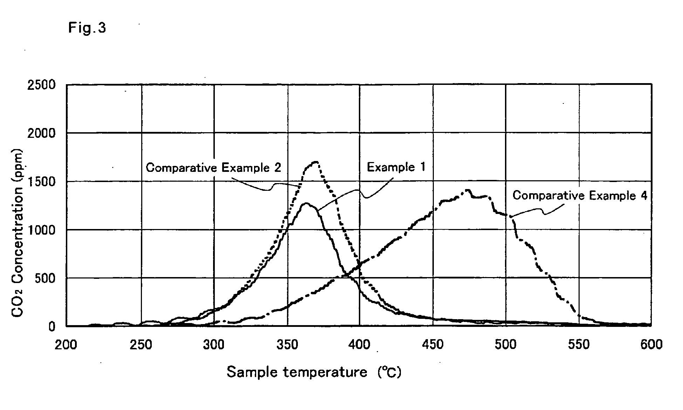

The obtained cerium-containing composite oxide sample of example 1 and comparative examples 2 and 4, and a carbon black are prepared in a mass ratio of 200:1. The prepared materials were mixed for 20 minutes by using a mixing and grinding machine, to thereby prepare mixed powders of the cerium-containing composite oxide sample and the carbon black. The obtained mixed powders were molded into a tablet shaped sample. The tablet-shaped sample thus obtained was pulverized, and formed into a pellet of 0.5 to 1.0mm by using a filter. 1.0g of the pellet was filled into a fixed bed flow type reactor, and the atmosphere was controlled to 10%O₂. The temperature of the fixed bed flow type reactor was increased at 10°C/min, and the PM combustion activity was evaluated by measuring the amount of CO₂ by using FT-IR, which was generated by burning the carbon black. The temperature for burning 10% of the mixed carbon black was set as 10% carbon combustion temperature (T₁₀), and the temperature for burning 50% of the carbon black was set as 50% carbon combustion temperature (T₅₀), to thereby make an index of combustion activity. The results thereof are shown in table 1 and FIG. 3. Note that FIG. 3 is a graph wherein a sample temperature (°C) is taken on the horizontal axis, and CO₂ concentration (ppm) is taken on the vertical axis, and data of the example 1 is shown by solid line.

### (Example 2)

Dinitrodianmine platinum solution (Pt(NH₃)₂ · (NO₂)₂) was prepared as a Pt source. The dinitrodianmine platinum solution was dissolved into pure water, and the cerium-containing composite oxide was added thereto. Then, the same operation as that of the example 1 was performed, other than a point that the cerium-containing composite oxide containing Bi and Pr with 0.1% Pt carried on each particulate was obtained by evaporating and drying the solution at 80°C. Then, "2. Measurement of the oxygen absorption desorption capability", and "3. Calculation of the oxygen desorption speed", as described in the example 1, were performed.

The results thereof are shown in table 1 and FIGs. 1 and 2.

### (Example 3)

The cerium-containing composite oxide containing Bi and Pr was obtained by performing the same operation as that of the example 1 other than a point that the aforementioned each nitrate salt and nitric acid solution of Pr were mixed in the molar ratio of Ce:Bi:Pr=7:2:1 to thereby obtain a raw material solution. Then, "2. Measurement of the oxygen absorption desorption capability" described in the example 1, was performed.

The results thereof are shown in FIG. 1.

### (Example 4)

The cerium-containing composite oxide containing Bi and Pr was obtained by performing the same operation as that of the example 1 other than a point that the aforementioned each nitrate salt and nitric acid solution of Pr were mixed in the molar ratio of Ce:Bi:Pr=6:3:1 to thereby obtain the raw material solution. Then, "2. Measurement of the oxygen absorption desorption capability" described in the example 1, was performed.

The results thereof are shown in table 1 and FIG. 1.

### (Comparative example 1)

An oxide mainly composed of Ce was obtained in the same process and under the same condition as those of the example 1, other than a point that only Ce nitrate salt was used as the raw material solution.

"2. Measurement of the oxygen absorption desorption capability", and "4. Measurement of the PM combustion activity", described in the example 1, were performed for the obtained cerium oxide sample.

The results thereof were shown in table 1 and FIG. 1.

### (Comparative example 2)

Solution, in which the molar ratio of Ce and Bi was set to 9:1, was adjusted as the raw material solution.

Other than that, "2. Measurement of the oxygen absorption desorption capability", and "4. Measurement of the PM combustion activity", described in the example 1, were performed for the cerium-containing composite oxide containing Bi, in the same process and under the same condition as those of the example 1.

The results thereof were shown in table 1 and FIGs.1 and 3 (broken line).

### (Comparative example 3)

A commercially available Ceria·Zirconia composite oxide (by DAIICHI KIGENSO KAGAKU KOGYO CO LTD. synthesized in the molar ratio of Ce and Zr, 14:86) was prepared.

By using commercially available Ceria · Zirconia, "2. Measurement of the oxygen absorption desorption capability", and "3. Calculation of the oxygen desorption speed", and "4. Measurement of the PM combustion activity" described in the example 1, were performed.

The results thereof are shown in table 1 and FIGs.1 and 2.

### (Comparative example 4)

0.1% of Pt was carried on the Ceria·Zirconia composite oxide described in the comparative example 3 by performing the same operation as described in the example 2.

"2. Measurement of the oxygen absorption desorption capability", "3. Calculation of the oxygen desorption speed", and "4. Measurement of the PM combustion activity", described in the example 1, were performed by using the commercially available Ceria·Zirconia composite oxide with 0.1 % of Pt carried thereon.

The results thereof are shown in table 1 and FIGs.1 to 3 (one dot chain line).

**[Table 1]**

| | Constituent (molarratio) element | | | | Carried Pt (mass%) | Oxygen absorption desorption capability (µmol/g) | | PM combustion activity (°C) | | Oxygen desorptionspeed (µ mol/g.sec) |
|---|---|---|---|---|---|---|---|---|---|---|
| | C e | B i | P r | Z r | | 300°C | 500°C | T₁₀ | T₅₀ | |
| Example1 | **0.50** | **0.10** | **0.40** | - | - | **542** | **597** | **312** | **361** | **0.29** |
| Example2 | **0.50** | **0.10** | **0.40** | - | **0.10** | **673** | **589** | - | - | **0.51** |
| Example3 | **0.70** | **0.20** | **0.10** | - | - | **680** | **709** | - | - | - |
| Example4 | **0.60** | **0.30** | **0.10** | - | - | **1004** | **1099** | - | - | - |
| Comparative Example 1 | **1.00** | - | - | - | - | **1** | **73** | **331** | **407** | - |
| Comparative Example 2 | **0. 90** | **0.10** | - | - | - | **394** | **469** | **327** | **367** | - |
| Comparative Example 3 | **0.14** | - | - | **0.86** | - | **0** | **96** | **365** | **462** | **0.05** |
| Comparative Example 4 | **0. 14** | - | - | **0.86** | **0.10** | **29** | **125** | **383** | **460** | **0.08** |

The results of measuring 10% carbon combustion temperature T₁₀ and 50% carbon combustion temperature T₅₀ were compared between the example 1 and the comparative examples 2, 4.
Then, in the cerium-containing composite oxide containing Bi and Pr of the present invention, decrease of 15°C was confirmed in 10% carbon combustion temperature T₁₀, and decrease of 6°C was confirmed in 50% carbon combustion temperature T₅₀, compared with the conventional cerium-containing composite oxide containing Bi (comparative example 2), as shown in table 1 and FIG. 3. Further, in the composite oxide of the present invention, decrease of 71 °C was confirmed in 10% carbon combustion temperature T₁₀, and decrease of 99°C was confirmed in 50% carbon combustion temperature T₅₀, compared with the Ceria · Zirconia composite oxide (comparative example 4).

In the cerium-containing composite oxide containing Bi and Pr according to the present invention, the reason for the decrease of the combustion start temperature T₁₀, 50% carbon combustion temperature T₅₀ is not sufficiently clarified. However, it can be considered that in the composite oxide of the present invention, Oxygen absorption desorption ability is increased by improvement of the oxygen absorption desorption capability at 300°C (low temperature area), and therefore 10% carbon combustion temperature T₁₀, 50% carbon combustion temperature T₅₀ are decreased, and this contributes to increase of the combustion speed.

Based on the above-described event, the absorption capability obtained by the measurement of the oxygen absorption desorption capability, is compared between examples 1 to 4, and comparative examples 1 to 4.
As is clarified from table 1 and FIG. 1, in a temperature range of 300°C to 500°C, the cerium-containing composite oxide containing Bi and Pr (example 1) according to the present invention exhibits the oxygen absorption desorption capability of a large volume, compared with a conventional cerium-containing composite oxide containing Bi (comparative example 2). Meanwhile, the cerium oxide (comparative example 1) and the Ceria · Zirconia composite oxide (comparative examples 3, 4) scarcely exhibits the oxygen absorption desorption capability at 300°C, and only slight oxygen absorption desorption capability is exhibited even at 500°C.

Next, the desorption speed obtained by the aforementioned measurement of the oxygen desorption speed is compared between the examples 1, 2, and the comparative examples 3, 4.

As is clarified from FIG. 2, under atmosphere containing 2% or more of H₂, at 300°C, the oxygen desorption speed of the cerium-containing composite oxide containing Bi and Pr (example 1) is about three times higher than that of the conventional Ceria· Zirconia composite oxide (comparative example 3) and the Ceria· Zirconia composite oxide (comparative example 4) with Pt carried thereon. Further, the cerium-containing composite oxide (example 2) containing Bi and Pr with Pt carried thereon shows about five times higher oxygen desorption speed, compared with the Ceria·Zirconia composite oxide (comparative example 4) with Pt carried thereon.

It is not sufficiently clarified at present, why the oxygen absorption desorption capability and the oxygen desorption speed of the cerium-containing composite oxide containing Bi and Pr according to the present invention, is increased compared with the conventional cerium-containing composite oxide containing Bi. However, a basic mechanism of absorbing and desorping oxygen is considered to be the same as a mechanism of the conventional cerium-containing composite oxide containing Bi.
Namely, cation in the cerium-containing composite oxide mainly composed of Ce atom, causes apparent changes in valence, to desorb oxygen. Bi, Pr, and Ce are atoms with different kinds of ion radius. Accordingly, lattice strain is considered to be generated by substituting Ce site with Bi and Pr, in the cerium-containing composite oxide of the present invention. Then, oxygen in the lattice is set in a state of being easily desorped to outside the lattice due to the lattice strain, and the oxygen absorption desorption capability of the cerium-containing composite oxide containing Bi and Pr according to the present invention is improved.

In view of the above-described event, it can be considered that owing to high oxygen absorption desorption capability and high oxygen desorption speed as described above, the particulates of the present invention are excellent in the PM combustion activity, and it is found that the composite oxide satisfying such a property is suitable as the PM combustion catalyst.

### Industrial Applicability

The cerium-containing composite oxide containing Bi and Pr according to the present invention has excellent oxygen absorption desorption capability, and therefore is suitably used for removing PM discharged from a diesel engine.

### Brief description of the drawings

FIG. 1 is a graph showing oxygen absorption desorption capability at 300°C according to examples 1 to 4, and comparative examples 1 to 4.
FIG. 2 is a graph showing an oxygen desorption speed under existence of 2%H₂, at 300°C according to examples 1, 2, and comparative examples 3, 4.
FIG. 3 is a graph showing PM combustion activity according to example 1, and comparative examples 2, 4.

## Claims

1. A diesel particulate filter comprising a cerium-containing composite oxide and a filter matrix,
wherein when the molar ratio of Ce, Bi, Pr is expressed by Ce:Bi:Pr = (1-x-y):x:y, Bi and Pr are contained so as to satisfy 0 < x ≤ 0.3, 0 < y ≤ 0.5, and oxygen absorption desorption capability at 300°C is 500 µmol/g or more, and wherein the filter matrix is made of cordierite or SiC, and supports the cerium-containing composite oxide.

2. The diesel particulate filter according to claim 1, wherein the cerium-containing composite oxide contains Bi and Pr, and under atmosphere containing 2% or more of H₂, an oxygen desorption speed of the cerium-containing composite oxide at 300°C is 0.1 µmolg·sec or more.

3. The diesel particulate filter according to claim 1 or 2, wherein the cerium-containing composite oxide supports at least one kind of platinum group element selected from Pt, Rh, and Pd.

4. The diesel particulate filter according to claim 3, wherein an amount of the supported platinum group element is less than 5 mass% to the cerium-containing composite oxide.

## Patentansprüche

1. Dieselpartikelfilter, umfassend ein Cer-haltiges Mischoxid und eine Filtermatrix, wobei, wenn das Molverhältnis von Ce, Bi, Pr durch Ce:Bi:Pr = (1-x-y):x:y angegeben ist, Bi und Pr derart enthalten sind, dass 0 < x ≤ 0,3, 0 < y ≤ 0,5 erfüllt sind, und das Sauerstoffabsorptions/desorptions-Vermögen bei 300°C 500 µmol/g oder mehr beträgt, und wobei die Filtermatrix aus Cordierit oder SiC hergestellt ist und das Cer-haltige Mischoxid trägt.

2. Dieselpartikelfilter nach Anspruch 1, wobei das Cer-haltige Mischoxid Bi und Pr enthält, und in einer Atmosphäre, die 2% oder mehr von H₂ enthält, eine Sauerstoffdesorptionsgeschwindigkeit des Cer-haltigen Mischoxids bei 300°C 0,1 µmol/g·sec oder mehr beträgt.

3. Dieselpartikelfilter nach Anspruch 1 oder 2, wobei das Cer-haltige Mischoxid mindestens eine Art von Platingruppen-Element, ausgewählt aus Pt, Rh und Pd, trägt.

4. Dieselpartikelfilter nach Anspruch 3, wobei eine Menge des getragenen Platingruppen-Elements weniger als 5 Massen-% zum Cer-haltigen Mischoxid beträgt.

## Revendications

1. Filtre à particules pour moteurs diesel comprenant un oxyde composite contenant du cérium et une matrice de filtre,
où lorsque le rapport molaire de Ce, Bi, Pr est exprimé par Ce:Bi:Pr = (1-x-y):x:y, Bi et Pr sont présents de sorte qu'ils satisfassent 0 < x ≤ 0,3, 0 < y ≤ 0,5, où la capacité d'absorption et de désorption de l'oxygène à 300°C est de 500 µmoles/g ou plus, et où la matrice de filtre est composée de cordiérite ou de SiC, et supporte l'oxyde composite contenant du cérium.

2. Filtre à particules pour moteurs diesel selon la revendication 1, où l'oxyde composite contenant du cérium contient Bi et Pr et sous une atmosphère contenant 2% ou plus de H₂, la vitesse de désorption de l'oxygène de l'oxyde composite contenant du cérium à 300°C est de 0,1 µmole/g.seconde ou plus.

3. Filtre à particules pour moteurs diesel selon la revendication 1 ou 2, où l'oxyde composite contenant du cérium supporte au moins un type d'élément du groupe du platine choisi parmi Pt, Rh et Pd.

4. Filtre à particules pour moteurs diesel selon la revendication 3, où la quantité d'élément du groupe du platine supporté est inférieure à 5% en masse de l'oxyde composite contenant du cérium.
